Europäisches Patentamt

European Patent Office

Office européen des brevets

(11) Publication number: 0 240 187
A1

# EUROPEAN PATENT APPLICATION

(21) Application number: 87302055.6

(22) Date of filing: 10.03.87

(51) Int. Cl.⁴: F16B 45/04 , A44C 11/02

(30) Priority: 10.03.86 GB 8605852
20.01.87 GB 8701205

(43) Date of publication of application:
07.10.87 Bulletin 87/41

(84) Designated Contracting States:
AT DE ES FR GB IT

(71) Applicant: Levingston, Gideon Rory
1 Parkfield Way
Topsham Exeter Devon, EX3 0DP(GB)

(72) Inventor: Levingston, Gideon Rory
1 Parkfield Way
Topsham Exeter Devon, EX3 0DP(GB)

(74) Representative: Burrows, Anthony Gregory et al
Haseltine Lake & Co. Hazlitt House 28
Southampton Buildings Chancery Lane
London, WC2 1AT(GB)

(54) A latch device.

(57) A Latch device comprises inner and outer, discontinuous co-planar loops l and 2, wherein the transverse sides 9 and l0 of the outer loop l constitute movement-limiting abutments for the inner loop 2. In an open condition of the device, an oblique guide surface 3l in the inner loop 2 guides a partially inserted ring to the discontinuities 7 and 8 of the loops l and 2, whence the ring can be completely disengaged. The ring preferably closely encircles the loops l and 2 in its engaged condition.

FIG. 7

EP 0 240 187 A1

## "A LATCH DEVICE"

This invention relates to a latch device.

GB 151,421 discloses a latch device in the form of a safety hook for a lifting or hauling appliance and comprising two open loops having respective continuous sides and respective discontinuous sides all parallel to a common axis. One of the loops is a double loop in the form of a flattish slide surrounding the other loop, which is of a plate-like form and can project from one or both ends of the slide. Surfaces of the two discontinuous sides mutually guide each other for relative movement parallelly to the axis, as do surfaces of the two continuous sides. By such movement, respective discontinuities in the form of slots through the two discontinuous sides can be brought into and out of alignment with each other to receive a chain or rope. The slide may be retained upon the other loop by any convenient means, for example a pin and slot, or by indentations at one end of the slide engaging parts of the other loop. A flat or spiral spring may be suitably enclosed in the slide to lock the device closed. The other loop may be provided with a chain-or rope-engaging hook at that end of the other loop a pull upon which closes the device.

A similar safety hook is disclosed in FR 1,346,950. To prevent the slide from dropping from the other loop, opposite outer edges of the other loop are formed with upwardly facing shoulders against which the slide abuts.

These known devices suffer from a number of disadvantages. Firstly, pin-and-slot systems, indentations, and shoulders can be unreliable as end stops for the relative axial movement of the two loops, because they provide only a relatively small overlap, in the direction of relative movement, between the two loops and are prone to distortion and/or wear under relatively heavy forces and usage; moreover, additional parts and/or material forming are required to provide them. This would be particularly disadvantageous in fields such as latch devices for jewellery. Secondly, a rope in one of the ends of the interior of the other loop and having the slide moved over it can become trapped between a laterally directed internal face of the slide and a laterally directed external face of the other loop, so jamming the slide on the other loop. Thirdly, because the interior space of each loop extends beyond its slot in both axial directions, there can be difficulty in disengaging the rope or chain from the latch because it overshoots the aligned slots, especially if the operator cannot see the latch device, or can only see the device with difficulty; this would be particularly disadvantageous with jewellery latch devices.

According to the one aspect of the present invention, there is provided a latch device comprising inner and outer loops with first and second continuous sides, first and second discontinuous sides having respective discontinuities, and transverse sides interconnecting the respective continuous and discontinuous sides, contacting surfaces of the continuous sides and contacting surfaces of the discontinuous sides being so shaped as mutually to guide the loops for relative movement parallelly to a common axis parallel to the continuous and discontinuous sides, to bring the discontinuities into and out of substantial alignment with each other, and limiting means limiting the extent of said relative movement, characterized in that the inner and outer loops lie substantially in a plane containing said axis, with the outer loop thereby substantially encircling the inner loop in said plane, and said limiting means comprises the transverse sides of the outer loop.

This has the advantage of providing relatively strong and reliable limiting abutments, without additional parts or additional material forming.

According to another aspect of the present invention, there is provided a latch device comprising inner and outer loops with first and second continuous sides, first and second discontinuous sides having respective discontinuities, and transverse sides interconnecting the respective continuous sides, contacting surfaces of the discontinuous sides being so shaped as mutually to guide the loops for relative movement parallelly to a common axis parallel to the continuous and discontinuous sides, to bring the discontinuities into and out of substantial alignment with each other, and limiting means limiting the extent of said relative movement, characterized in that one of said loops is formed with a guide surface which, in an open condition of said device wherein said discontinuities are substantially fully aligned, extends to said discontinuities obliquely to said axis.

This guide surface promotes easy disengagement of the device when required.

According to a further aspect of the present invention, there is provided a latch device comprising inner and outer loops with first and second continuous sides, first and second discontinuous sides having respective discontinuities, and transverse sides interconnecting the respective continuous and discontinuous sides, contacting surfaces of the continuous sides and contacting surfaces of the discontinuous sides being so shaped as mutually to guide the loops for relative movement parallelly to a common axis parallel to the continuous and discontinuous sides, to bring the discontinuities into and out of substantial alignment with each other and limiting means limiting the extent of said relative movement characterized in that a ring is provided which is partially insertable through said discontinuities for encircling said loops and is of an internal width closely to encircle said loops.

A ring of such internal width has the advantage of discouraging unwanted disengagement of the device.

In other that the invention may be clearly understood and readily carried into effect, reference will now be made, by way of example, to the accompanying drawings, in which:-

Figure I shows a side elevation of a latching catch for jewellery,

Figure 2 shows a section taken on the line II-II of Figure I,

Figure 3 shows a side elevation of a modified version of the catch,

Figure 4 shows a sectional side elevation of another modified version of the catch,

Figure 5 shows a side elevation of a further modified version of the catch,

Figure 6 shows a perspective view of a yet further modified version of the catch,

Figure 7 shows a side elevation of a yet still further modified version of the catch, and

Figure 8 shows a section taken on the line VIII-VIII of Figure 7.

Referring to Figure I, the catch includes an outer metal loop I at the inside of which is an inner metal loop 2. The loops I and 2 are of respective forms elongated along a common axis A and include respective straight continuous sides 3 and 4 and respective straight discontinuous sides 5 and 6, all parallel to the axis A. The discontinuous sides 5 and 6 are formed with respective discontinuities 7 and 8 in the form of air gaps perpendicular to the axis A. The continuous sides 3 and 4 are in contact with each other, as also are the discontinuous sides 5 and 6, by way of respective surfaces so shaped as mutually to guide the continuous sides, or the discontinuous sides, as the case may be, for relative movement parallelly to the axis A. The sides 3 and 5 are joined at their ends by arcuate sides 9 and IO to complete the loop I, whilst the sides 4 and 6 are joined at their ends by arcuate sides II and I2 thereby to complete the loop 2. Fixed to the side IO on the axis A is an eye I3 connected to one end of a jewellery chain (not shown), for example, to be placed around a wearer's neck. The other end of the jewellery chain is provided with a simple ring (not shown) which, with the air gaps 7 and 8 in their aligned condition shown in Figure I, can be partially inserted by hand through the gaps 7 and 8 and then drawn by hand over those free ends of the loops I and 2 to the right of the gaps 7 and 8, so that, upon the hands placing the chain around the wearer's neck, the weight of the chain and/or a pull by the hands pulls that ring to the right and thus draws the loop 2 into a position in which its arcuate side II abuts the side 9 and the air gaps 7 and 8 are completely non-aligned. To release the catch, the ring is drawn to the left and towards the discontinuities 7 and 8. It first of all tends to engage in the discontinuity 8 and come to bear against the side 5 so that this ring pulls the loop 2 leftwards until the discontinuity 8 becomes substantially aligned with the discontinuity 7 and the ring passes out through the discontinuity 7. To prevent overshooting of the ring relative to the discontinuity 7, the fully aligned condition of the discontinuities 7 and 8 is defined by the side I2 abutting the side IO in that condition.

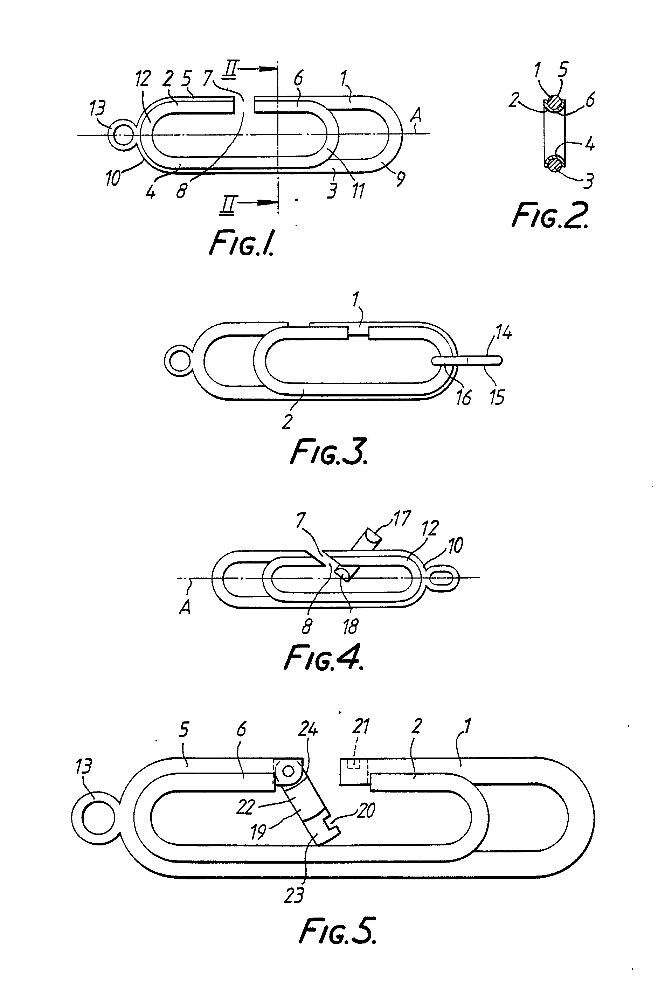

As shown in Figure 2, the loop I may be of circular cross-section, with the loop 2 of arcuate cross-section complementary to that of the loop I.

Alternatively, it is possible for the outer loop I to be of arcuate cross-section and the inner loop 2 to be of circular cross-section.

Furthermore, it is possible instead for the loops I and 2 to be of other suitable complementary cross-sections, e.g. of complementary rectangular cross-sections.

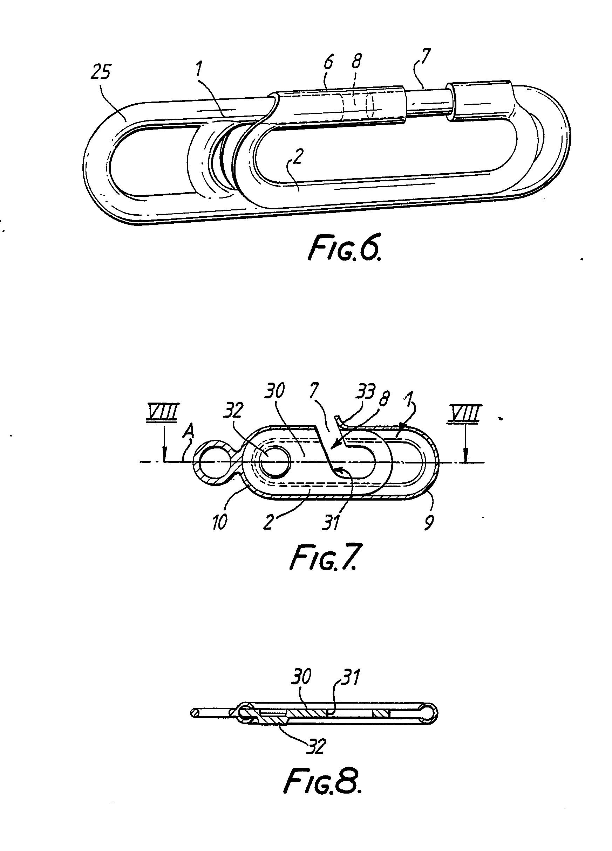

In the version shown in Figure 3, instead of the chain terminating at one end in a simple ring, it may terminate in the form of a figure-of-eight piece I4 of which one ring I5 is connected to the chain and of which the other ring I6 is latched in the catch. In order to reduce the risk of unwanted disconnection of the ring I6 from the catch, the ring I6 is of an internal diameter relatively closely to encircle the loops I and 2, thereby, compared to a ring of a considerably greater diameter, making it appreciably more difficult for the catch to return to the condition shown in Figure I, in which the ring is readily removable from the catch.

In order again to increase the difficulty of unwanted disconnection of the ring from the catch, the version shown in Figure 4 can be adopted, in which the air gaps 7 and 8 are obliquely inclined, rather than perpendicular, to the axis A, the oblique inclination being outwards away from the sides IO and I2, whereby, to attain its inclined position, the ring I7 of the chain has to be tilted through an obtuse angle from its natural position in the catch when the chain is under tension. Moreover, the ring I7 of the chain is of a cross-section which is wider on a first imaginary axis of that cross-section than on a second imaginary axis perpendicular to the first axis and than the width of the air gaps 7 and 8, although its width on the second axis is less than that of the air gaps, so that the ring I7 can be removed from the catch only if the ring I7 is orientated within a narrow angular range with respect to the axis A. This feature can be readily achieved by providing the ring 17 with a flat 18 around at least part of the external periphery thereof.

In certain applications, where the forces applied to the ends of the catch may become sufficiently great to distort its loops with air-gap discontinuities, for example when the device is used in attaching a rope to a hull of a yacht, it may be appropriate to arrange that the free ends of at least one of the loops are mechanically interconnected across the air gap. Such a device is shown in Figure 5, in which the left-hand end of the loop 1 has an arm 19 pivotally mounted thereon so as to be turnable in the plane of the loops 1 and 2. The free end zone 23 of the arm 19 is provided with a recess 20, whereby the free end of the arm 19 can engage behind a fixed detent 21 at the right-hand end of the loop 1. The central part 22 of the arm 19 is identical in cross-section to the loop 1, but the two end zones 23 and 24 of the arm 19 are thinner perpendicularly to the plane of the loop 1, the end zone 23 being arranged to turn into a complementary slot which is formed in the right-hand end of the loop 1 and across which the detent 21 extends, and the end zone 24 being received in a complementary slot in its own end of the loop 1. The arm 19 is of course of such shape that the loop 2 can readily slide past the arm 19 when the arm is in its engaged position. In the disengaged position of the arm 19 shown in Figure 5, a ring can readily be partially inserted and placed over the free right-hand ends of the loops 1 and 2 and, when the ring so placed over pulls the loop 2 rightwards, the loop 2 automatically swings the arm 19 into its engaged position and retains it there. The arm 19 thus moreover provides an extra safeguard against inadvertent removal of the ring from the catch. As a further safeguard, it is also possible to provide some manually operable means whereby the arm 19 is retained in its engaged position until movement thereof into its disengaged position is required.

In Figure 6, there is shown another manner of coping with forces on the loops 1 and 2 tending to open the same. In this version, the discontinuous side 6 of the loop 2 is of a tubular form. Moreover, to improve the strength of the connection provided by the eye 13, such connection can instead be provided as a duplicate extension 25 of the loop 1.

It is also possible for the inner loop 2 to be partially filled-in to provide a guide surface inclined to the axis A and extending to the air gap 8 to lead the ring 16 directly to the air gap 8 during release of the catch. Such a version is shown in Figures 7 and 8, in which the loop 2 is partially filled-in by a plate-like part 30 (or, in another manner of describing the feature, the loop 2 varies in dimension in its own plane to provide the plate-like part 30) which provides the inclined guide surface 31 extending to the air gap 8, which is itself oblique to the axis A. The part 30 also reinforces the loops 1 and 2. The part 30 may include a button 32 whereby a wearer may more easily displace the inner loop 2 along the loop 1. This feature is particularly useful if the loop 2 slides only with significant friction in the loop 1 in order to discourage unwanted movement of the loop 2 along the loop 1. The loop 2 and its part 30 are a plate-form unit produced by stamping or extrusion for example. The loop 1 may include an oblique, outwardly-projecting lip 33 at one of its extremities, to facilitate alignment of the ring 16 with the air gap 7 during insertion of the ring 16 in the catch, although such lip may instead be omitted.

In cases where the ring, such as 16, is of an internal diameter deterring the loops 1 and 2 from moving relative to each other while the ring is in a position at or near the axis A, as an extra safeguard preventing unwanted movement of the ring from that position, the ring or the loop 1 or 2 can be provided with some manually releasable means, such as a hook, for engagement to retain the ring in that position.

## Claims

1. A latch device comprising inner and outer loops (1,2) with first and second continuous sides (3,4), first and second discontinuous sides (5,6) having respective discontinuities (7,8) and transverse sides (9,10;11,12) interconnecting the respective continuous and discontinuous sides (3,4;5,6), contacting surfaces of the continuous sides (3,4) and contacting surfaces of the discontinuous sides (5,6) being so shaped as mutually to guide the loops (1,2) for relative movement parallelly to a common axis (A) parallel to the continuous and discontinuous sides (3-6), to bring the discontinuities (7,8) into and out of substantial alignment with each other, and limiting means (9,10) limiting the extent of said relative movement, characterized in that the inner and outer loops (1,2) lie substantially in a plane containing said axis (A), with the outer loop (1) thereby substantially encircling the inner loop (2) in said plane, and said limiting means (9,10) comprises the transverse sides (9,10) of the outer loop (1).

2. A latch device according to claim 1, wherein said inner loop (2) abuts one (10) of the transverse sides (9,10) of the outer loop (1) in an open condition in which said discontinuities (7,8) are substantially fully aligned and abuts the other (9) of the transverse sides (9,10) of the outer loop (1) in a closed condition in which said discontinuities (7,8) are fully out of alignment.

3. A latch device according to claim 2, wherein one of said loops (l,2) is formed with a guide surface (3l) which, in said open condition, extends to said discontinuities (7,8) obliquely to said axis (A) in a sense away from said other (9) of the transverse sides (9,l0) to said one (l0) of the transverse sides (9,l0).

4. A latch device according to any preceding claim, wherein said discontinuities (7,8) are inclined at a common angle obliquely to said axis (A).

5. A latch device according to claim 4 as appended to claim 3, wherein said guide surface (3l) and said discontinuities (7,8) are all inclined at said common angle.

6. A latch device according to any preceding claim, and further comprising a ring (l6) partially insertable through said discontinuities (7,8) for encircling said loops (l,2).

7. A latch device according to claim 6, wherein said ring (l6) is of an internal width closely to encircle said loops (l,2).

8. A latch device according to any preceding claim, wherein said inner loop (2) has a lateral projection (32) whereby a user may more easily produce said relative movement.

9. A latch device comprising inner and outer loops (l,2) with first and second continuous sides (3,4), first and second discontinuous sides (5,6) having respective discontinuities (7,8) and transverse sides (9,l0;ll,l2) interconnecting the respective continuous and discontinuous sides (3,4;5,6), contacting surfaces of the continuous sides (3,4) and contacting surfaces of the discontinuous sides (5,6) being so shaped as mutually to guide the loops (l,2) for relative movement parallelly to a common axis (A) parallel to the continuous and discontinuous sides (3-6), to bring the discontinuities (7,8) into and out of substantial alignment with each other, and limiting means (9,l0) limiting the extent of said relative movement, characterized in that one of said loops (l,2) is formed with a guide surface (3l) which, in an open condition of said device wherein said discontinuities (7,8) are substantially fully aligned, extends to said discontinuities (7,8) obliquely to said axis (A).

l0. A latch device comprising inner and outer loops (l,2) with first and second continuous sides (3,4), first and second discontinuous sides (5,6) having respective discontinuities (7,8) and transverse sides (9,l0;ll,l2) interconnecting the respective continuous and discontinuous sides (3,4; 5, 6), contacting surfaces of the continuous sides (3,4) and contacting surfaces of the discontinuous sides (5,6) being so shaped as mutually to guide the loops (l,2) for relative movement parallelly to a common axis (A) parallel to the continuous and discontinuous sides (3,6), to bring the discontinuities (7,8) into and out of substantial alignment with each other and limiting means (9,l0) limiting the extent of said relative movement, characterized in that a ring (l6) is provided which is partially insertable through said discontinuities (7,8) for encircling said loops (l,2) and is of an internal width closely to encircle said loops (l,2).

FIG.1.

FIG.2.

FIG.3.

FIG.4.

FIG.5.

FIG.6.

FIG.7.

FIG.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 677 224 (HEYWOOD) <br> * Page 4, lines 34-62; figures 1-3 * | 1,3-5 | F 16 B 45/04 <br> A 44 C 11/02 |
| X | | 9 | |
| Y | | 10 | |
| | --- | | |
| A | EP-A-0 159 787 (RANDALL) <br> * Page 6, line 63 - page 7, line 3; figures 1a,1b * | 6,7 | |
| Y | | 10 | |
| | --- | | |
| A | CH-A- 254 617 (BRENDLE) <br> * Page 1, lines 16-61; figures 1-3 * | 8 | TECHNICAL FIELDS SEARCHED (Int. Cl.4) |
| | --- | | A 44 C <br> F 16 B <br> F 16 G |
| D,A | GB-A- 151 421 (FREEMAN) | | |
| | --- | | |
| D,A | FR-A-1 346 950 (LAURET) | | |
| | ----- | | |

The present search report has been drawn up for all claims

| Place of search | Date of completion of the search | Examiner |
|---|---|---|
| THE HAGUE | 23-07-1987 | VAN DER WAL W |